# FASCICULE DE BREVET EUROPEEN

(11) **EP 2 600 351 B1**
(45) Date de publication et mention de la délivrance du brevet: **07.01.2015**
(21) Numéro de dépôt: 12194606.5
(22) Date de dépôt: 28.11.2012
(51) Int. Cl.: G21C 15/18, G21C 9/033, G21D 3/04

(54) **Ensemble et procédé d'injection d'eau d'un élément absorbeur de neutrons pour le refroidissement d'un coeur d'un réacteur nucléaire en situation de crise.**
Anordnung und Verfahren zur Wassereinspritzung eines Neutronenabsorberelements zum Kühlen eines Reaktorkerns in einer Krisensituation
Assembly and method for water injection of a neutron absorber element for cooling a nuclear reactor core in a crisis situation

(30) Priorité: 30.11.2011 FR 1160940
(43) Date de publication de la demande: 05.06.2013
(73) Titulaire: AREVA NP, 92400 Courbevoie (FR)
(72) Inventeur: Muller, Thierry, 71390 St Helene (FR); Guillaume, Emilie Maud, 38200 Vienne (FR); Bombail, Jean-Paul, 69003 Lyon (FR); Guillodo, Michael, 71190 Broye (FR)
(74) Mandataire: Domenego, Bertrand

(56) Documents cités:
- GB-A- 892 290
- JP-A- 2011 052 970
- US-A1- 2010 239 062
- Nuclear and Industrial Safety Agency: "Seismic Damage Information (29th Release)", , 16 mars 2011 (2011-03-16), XP055033863, Extrait de l'Internet: URL:http://www.nisa.meti.go.jp/english/fil es/en20110318-2.pdf [extrait le 2012-07-25]
- TEPCO: "Press Release (March 13, 2011)", , 13 mars 2011 (2011-03-13), XP002680813, Extrait de l'Internet: URL:http://www.tepco.co.jp/en/press/corp-c om/release/11031308-e.html [extrait le 2012-07-26]

## Description

La présente invention concerne un dispositif et un procédé d'injection d'eau contenant un élément absorbeur de neutrons pour le refroidissement d'un coeur de réacteur nucléaire en situation de crise, comme par exemple, en cas de perte totale de l'alimentation électrique et des moyens de refroidissement.

Les réacteurs nucléaires à eau sous pression comportent une cuve renfermant le coeur du réacteur nucléaire et un circuit primaire assurant la circulation et le refroidissement de l'eau sous pression qui vient en contact à l'intérieur de la cuve, avec le coeur du réacteur nucléaire.

Le circuit primaire du réacteur nucléaire comporte au moins une boucle sur laquelle est disposé un générateur de vapeur qui est relié à la cuve, directement par une première canalisation, ou branche chaude, assurant l'alimentation de la partie primaire du générateur de vapeur en eau sous pression échauffée au contact des assemblages combustibles du coeur. La partie primaire du générateur de vapeur est également reliée à la cuve, avec interposition d'une pompe primaire, par l'intermédiaire de canalisations de liaison comportant en particulier une seconde canalisation ou branche froide de la boucle du circuit primaire reliée à la cuve.

L'eau de refroidissement sous pression du réacteur nucléaire, assure, à l'intérieur des générateurs de vapeur, l'échauffement et la vaporisation d'eau d'alimentation, pour produire de la vapeur assurant l'entraînement d'une turbine.

Le réglage de la réactivité du coeur du réacteur nucléaire, c'est-à-dire le réglage de la densité de neutrons produits dans le coeur du réacteur nucléaire en fonctionnement, peut être effectué en particulier par injection dans le circuit primaire d'une solution aqueuse renfermant un élément absorbeur de neutrons tel que le bore 10.

On peut utiliser par exemple une solution renfermant du bore telle qu'une solution d'acide borique qui est stockée dans les accumulateurs de secours du système d'injection de sécurité ou dans des réservoirs sous pression reliés à l'une au moins des branches froides du circuit primaire du réacteur nucléaire par une canalisation d'injection sur laquelle sont disposés des moyens de commande ou de réglage tels que des vannes et un moyen d'injection tel qu'une ou plusieurs pompes volumétriques.

Lorsqu'un réacteur nucléaire est à l'arrêt, que celui-ci soit normal ou accidentel, il est nécessaire d'évacuer la puissance résiduelle du coeur pour éviter la fusion des assemblages combustibles.

De plus une borication du circuit primaire réacteur à l'arrêt est nécessaire pour contrôler la réactivité du coeur.

Ces fonctions doivent être assurées même dans le cas où les alimentations électriques de la centrale nucléaire sont indisponibles.

En cas de perte totale des alimentations électriques et des moyens de refroidissement, il est nécessaire de mettre en oeuvre au plus tôt un moyen d'injection en continu d'eau contenant un élément absorbeur de neutrons, par exemple avec une teneur minimale de 2500 ppm de bore à la teneur isotopique naturelle en bore 10, et un débit variant entre 20 et 90 m³ par heure. Cette injection d'eau contenant un élément absorbeur de neutrons, et notamment du bore 10, doit intervenir très rapidement après l'arrêt du réacteur, au-delà, la fusion des assemblages combustibles aura commencé.

Dans le cas où la dégradation des assemblages combustibles ne peut être évitée, l'injection d'eau contenant un élément absorbeur de neutrons reste nécessaire avec comme objectif de maintenir le coeur sous-critique et refroidi. Le débit nécessaire évolue avec la puissance résiduelle présente dans le coeur du réacteur nucléaire.

Les scénarios de gestion des situations accidentelles prévus à ce jour, prennent en compte la perte totale des alimentations électriques, dans des systèmes de refroidissement existants ou la perte totale de la source froide due par exemple à une brèche dans le circuit primaire principale.

Mais, ces scénarios ne prévoient pas le cumul des deux.

Pour remédier à une telle situation, il est nécessaire d'évacuer la puissance résiduelle du coeur afin d'éviter la fusion des assemblages combustibles par injection en continu d'eau contenant un élément absorbeur de neutrons constitué par du bore.

Une solution consiste à utiliser des bâches existantes sur le site et que l'on remplirait en continu dans cette situation accidentelle par un mélange d'eau et de bore.

Mais, la difficulté réside dans le transport de quantité importante d'eau contenant du bore et préparée en dehors de la zone de réacteur nucléaire en situation de crise

L'invention a pour but de proposer un ensemble d'injection d'eau contenant un élément absorbeur de neutrons qui permet d'éviter ces inconvénients et capable de fonctionner malgré la perte totale d'alimentation électrique du réacteur nucléaire.

L'invention a donc pour objet un ensemble d'injection d'eau contenant un élément absorbeur de neutrons pour le refroidissement d'un coeur de réacteur nucléaire en situation de crise, **caractérisé en ce qu'il** comprend une structure mobile portant une tuyauterie principale dont une première extrémité est destinée à être raccordée à une alimentation en eau et dont une seconde extrémité est destinée à être raccordée à un circuit relié au circuit primaire du réacteur nucléaire et comportant, entre les première et seconde extrémités par rapport au sens de circulation de l'eau :
- une pompe,
- des moyens d'injection en continu dans l'eau de la tuyauterie principale de l'élément absorbeur de neutrons sous forme de poudre,
- un premier système de mélange et de dissolution de la poudre dudit élément absorbeur de neutrons avec l'eau, et
- des moyens de pilotage et de contrôle du débit d'eau et du débit de la poudre injectée.

Selon d'autres caractéristiques de l'invention :
- la tuyauterie principale comporte, entre la pompe et les moyens d'injection, un dispositif de chauffage de l'eau, régulé par les moyens de pilotage,
- l'ensemble comprend une tuyauterie secondaire dont une première extrémité est destinée à être raccordée à une alimentation en eau et dont une seconde extrémité est raccordée à la tuyauterie principale entre le premier système de mélange et la seconde extrémité de la tuyauterie principale,
- ladite tuyauterie secondaire comportant une pompe,
- la tuyauterie principale comporte, entre la seconde extrémité de la tuyauterie secondaire et la seconde extrémité de la tuyauterie principale, un second système de mélange complémentaire de la poudre de l'élément absorbeur de neutrons et l'eau provenant de la tuyauterie secondaire,
- le premier système de mélange et de dissolution est formé par un mélangeur mécanique et par des inducteurs à ultrasons commandés par les moyens de pilotage,
- le second système de mélange est formé par un mélangeur mécanique, et
- le débit d'eau dans la tuyauterie principale est inférieur au débit d'eau dans la tuyauterie secondaire.

L'invention a également pour objet un procédé de refroidissement d'un coeur de réacteur nucléaire en situation de crise à l'aide d'un ensemble tel que précédemment mentionné, caractérisé en ce que :
- on transporte la structure mobile à proximité du bâtiment du réacteur nucléaire sinistré,
- on raccorde la première extrémité de la tuyauterie principale à une alimentation en eau et la seconde extrémité de cette tuyauterie à un circuit relié au circuit primaire du réacteur,
- on commande, par les moyens de pilotage, la pompe de la tuyauterie principale, les moyens d'injection dans l'eau de la tuyauterie principale de l'élément absorbeur de neutrons sous forme de poudre, le premier système de mélange et de dissolution de la poudre dudit élément absorbeur de neutrons avec l'eau,
- on alimente le circuit primaire du réacteur nucléaire avec l'eau contenant l'élément absorbeur de neutrons pour refroidir progressivement le coeur du réacteur nucléaire, et
- on régule par les moyens de pilotage les débits d'eau et de poudre et le premier système de mélange et de dissolution.

Selon d'autres caractéristiques de l'invention :
- on chauffe l'eau de la tuyauterie principale et on régule la température de cette eau par les moyens de pilotage,
- le procédé consiste :
   - à raccorder la première extrémité de la tuyauterie secondaire à une alimentation en eau,
   - à commander par les moyens de pilotage la pompe de cette tuyauterie,
   - à injecter l'eau de la tuyauterie secondaire dans la tuyauterie principale entre le premier système de mélange et de dissolution et la seconde extrémité de ladite tuyauterie principale,
   - à commander, par les moyens de pilotage, le second système de mélange pour effectuer un mélange complémentaire de la poudre avec l'eau,
   - à alimenter le circuit principal du réacteur nucléaire avec l'eau contenant l'élément absorbeur de neutrons, et
   - à réguler par les moyens de pilotage les débits d'eau des tuyauteries principales et secondaires, le débit de poudre et les premier et second systèmes de mélange et de dissolution.

Les caractéristiques et avantages de l'invention apparaîtront au cours de la description qui va suivre, donnée à titre d'exemple et faite en référence aux dessins annexés, sur lesquels :
- la Fig. 1 est un schéma d'un premier mode de réalisation d'un ensemble d'injection d'eau contenant un élément absorbeur de neutrons, conforme à l'invention, et
- la Fig. 2 est un schéma d'un second mode de réalisation d'un ensemble d'injection d'eau contenant un élément absorbeur de neutrons, conforme à l'invention.

Sur les figures, on a représenté schématiquement deux modes de réalisation d'un ensemble d'injection d'eau contenant un élément absorbeur de neutrons, comme par exemple du bore 10, pour le refroidissement d'un coeur d'un réacteur nucléaire en situation de crise, c'est-à-dire en cas de perte totale des alimentations électriques et des moyens de refroidissement.

On utilise une forme soluble du bore, par exemple de l'acide borique ou des borates.

Sur ces figures, le coeur du réacteur nucléaire est schématisé et désigné par la référence 1 et l'ensemble de refroidissement représenté à plus grande échelle est désigné par la référence 10.

L'ensemble de refroidissement 10 comprend une structure mobile 11 compacte, de poids et d'encombrement limités et compatible avec un transport par véhicule terrestre ou maritime ou par hélicoptère.

Cette structure 11 est constituée par exemple par un châssis portant tous les éléments permettant de refroidir le coeur du réacteur nucléaire par injection d'une eau douce ou de mer contenant un élément absorbeur de neutrons, comme par exemple du bore 10.

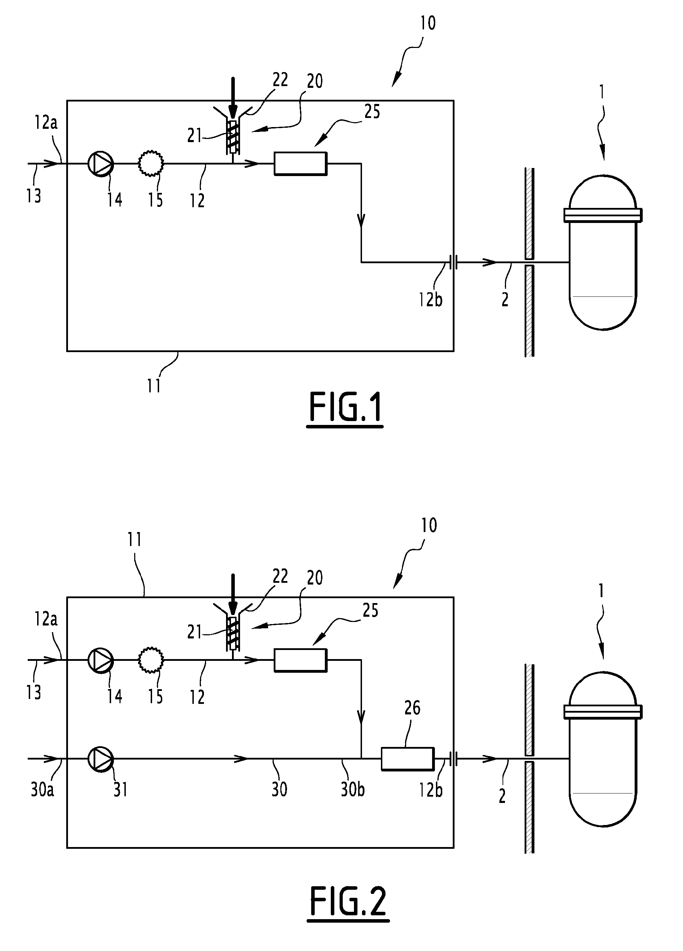

Selon le premier mode de réalisation représenté à la Fig. 1, la structure mobile 11 porte une tuyauterie principale 12 dont une première extrémité 12a est destinée à être raccordée par exemple par un organe de liaison de type connu, à une alimentation 13 en eau douce ou en eau de mer. Cette tuyauterie principale 12 comporte une seconde extrémité 12b destinée à être raccordée à un circuit relié au circuit primaire du réacteur nucléaire par l'intermédiaire d'un piquage 2 existant permettant l'injection de l'eau contenant l'élément absorbeur de neutrons dans ce circuit primaire.

Pour cela, la tuyauterie principale 12 comporte entre les première 12a et seconde 12b extrémités, par rapport au sens de circulation de l'eau, une pompe 14 et un dispositif de chauffage 15 de l'eau circulant dans ladite tuyauterie principale 12. Ce dispositif de chauffage 15 est formé par exemple par un système classique de chauffage électrique annulaire ou par tout autre système de chauffage approprié et de type connu.

La tuyauterie principale 12 comporte aussi en aval du dispositif de chauffage 15, des moyens 20 d'injection en continu dans l'eau de l'élément absorbeur de neutrons sous forme de poudre et un premier système 25 de mélange et de dissolution de cette poudre dans l'eau.

Les moyens 20 d'injection sont formés par exemple par une vis sans fin 21 dont l'entrée est reliée à une trémie 22 dans laquelle la poudre de l'élément absorbeur de neutrons est déversée en continu, par exemple par une désacheuse de type connu, non représentée.

Le premier système 25 de mélange et de dissolution est formé par un mélangeur mécanique permettant de réaliser le mélange entre l'eau et la poudre de l'élément absorbeur de neutrons et ce brassage mécanique est renforcé par des inducteurs à ultrasons, non représentés, augmentant l'efficacité de la dissolution de la poudre dans l'eau.

Les différents éléments, c'est-à-dire la marche ou l'arrêt de la pompe 14, le dispositif de chauffage 15, les débits d'eau et de poudre de l'élément absorbeur de neutrons, le premier système 25 de mélange et de dissolution sont régulés par un dispositif de pilotage, de type connu, non représenté.

Ainsi, on régule les débits d'eau et de poudre et on chauffe l'eau de façon à éviter la cristallisation de la poudre de l'élément absorbeur de neutrons.

A la Fig. 2, on a représenté un second mode de réalisation dont les éléments communs au précédent mode de réalisation ont été désignés par les mêmes références.

L'ensemble d'injection 10 selon le second mode de réalisation de la Fig. 2, comprend également une structure 11 mobile portant la tuyauterie principale 12 avec la pompe 14, le dispositif de chauffage 15, les moyens 20 d'injection en continu dans l'eau de la tuyauterie principale de la poudre de l'élément absorbeur de neutrons et le premier système 25 de mélange et de dissolution de cette poudre dans l'eau dans la tuyauterie principale 12.

Dans ce second mode de réalisation, la structure 11 porte également une tuyauterie secondaire 30 dont une première extrémité 30a est destinée à être raccordée par un organe de liaison de type connu, à une alimentation en eau douce ou en eau de mer. Cette tuyauterie secondaire 30 comporte également une seconde extrémité 30b raccordée à la tuyauterie principale 12 entre le premier système 25 de mélange et de dissolution et la seconde extrémité 12b de ladite tuyauterie principale 12. La tuyauterie secondaire 30 comporte aussi une pompe 31 commandée par les moyens de pilotage.

Dans ce mode de réalisation de la Fig. 2, la tuyauterie principale 12 comporte, entre la seconde extrémité 30b de la tuyauterie secondaire 30 et la seconde extrémité 12b de la tuyauterie principale 12, un second système 26 de mélange complémentaire de la poudre de l'élément absorbeur de neutrons et de l'eau provenant de ladite tuyauterie secondaire 30.

Ce second système 26 de mélange est formé par un mélangeur mécanique commandé également par les moyens de pilotage.

D'une manière générale, le débit d'eau de la tuyauterie principale 12 est inférieur au débit d'eau dans la tuyauterie secondaire 30. A titre d'exemple, le débit d'eau dans la tuyauterie principale 12 est compris entre 0,5 et 5 l/s et le débit d'eau dans la tuyauterie secondaire est compris entre 10 et 50 l/s. L'eau dans la tuyauterie secondaire 30 est à température ambiante.

En se reportant maintenant au mode de réalisation de la Fig. 2, on va décrire le fonctionnement de l'ensemble d'injection 10.

Dans le cas d'un réacteur nucléaire en situation de crise ayant perdu l'alimentation électrique et les moyens de refroidissement, la structure 11 est amenée à proximité du bâtiment du réacteur par un moyen de transport approprié.

Lorsque la structure 11 est en place, elle est raccordée à une source d'alimentation électrique extérieure et les premières extrémités 12a et 30a respectivement de la canalisation principale 12 et de la canalisation secondaire 30 sont raccordées à une alimentation en eau douce ou en eau de mer.

De même, la seconde extrémité 12b de la tuyauterie principale 12 est raccordée à un circuit débouchant dans le circuit primaire du réacteur nucléaire.

Ensuite, un opérateur actionne les moyens de pilotage de façon à commander la mise en route des pompes 14 et 31, du dispositif de chauffage 15, des moyens 20 d'injection en continu dans l'eau de la tuyauterie principale 12 de la poudre de l'élément absorbeur de neutrons, ainsi que le premier système 25 de mélange et de dissolution de ladite poudre et le second système 26 de mélange complémentaire de cette poudre.

La poudre est déversée en continu dans la trémie 22 et la vis sans fin 21 injecte en continu la poudre dans l'eau préalablement chauffée à l'intérieur de la tuyauterie principale 12.

Le brassage mécanique effectué par le premier système 25 permet de réaliser un mélange instantané entre l'eau et la poudre et les inducteurs à ultrasons de ce premier système 25 renforce l'efficacité de la dissolution de la poudre de l'élément absorbeur de neutrons dans l'eau. Le dispositif de chauffage 15 en ligne permet d'augmenter la cinétique de dissolution de la poudre de l'élément absorbeur de neutrons et de prévenir sa cristallisation. A titre d'exemple, le débit d'eau dans la tuyauterie principale 12 est compris entre 0,5 et 5 l/s.

L'eau contenant l'élément absorbeur de neutrons dissout est injectée dans le second système 26 de mélange qui assure la dilution de cette eau contenant l'élément absorbeur de neutrons dans un flux d'eau à température ambiante provenant de la tuyauterie secondaire 30 à un débit plus élevé.

A titre d'exemple, le débit de l'eau dans la tuyauterie secondaire 30 est compris entre 10 et 50 l/s.

A la seconde extrémité 12b de la tuyauterie principale 12, l'eau et l'élément absorbeur de neutrons dissout dans cette eau est injectée dans le circuit primaire du réacteur nucléaire en situation de crise afin soit de prévenir la fusion du coeur par le refroidissement au moyen de l'eau contenant suffisamment d'éléments absorbeurs de neutrons avec un débit suffisant, soit de ralentir, voire arrêter la fusion du coeur, dans le cas où la mise en service de cet ensemble d'injection intervient trop tard pour prévenir l'accident grave.

Dans le cas d'une structure 11 comportant uniquement la tuyauterie principale 12, comme montré à la Fig. 1, l'eau contenant l'élément absorbent de neutrons dissout est directement injectée dans le circuit primaire du réacteur nucléaire à la sortie du premier système 25 de mélange et de dissolution.

Les éléments composants l'ensemble d'injection 10 sont régulés par le dispositif de pilotage afin d'obtenir un mélange contenant l'élément absorbeur de neutrons assurant la capture neutronique et assurant un refroidissement efficace du coeur du réacteur nucléaire.

L'ensemble d'injection selon l'invention présente l'avantage d'être compact et de poids et d'encombrement compatibles avec un transport par véhicule terrestre ou maritime ou encore par hélicoptère.

Cet ensemble peut être stocké à distance et transporté rapidement sur les sites de la centrale en cas de besoin.

L'utilisation d'un élément de refroidissement sous forme de poudre plutôt que liquide permet de limiter le poids et cet ensemble est compatible avec une alimentation en eau de mer ou en eau douce évitant l'étape de dissolution de la poudre dans des bâches tampons, trop encombrantes et qui nécessitent un dispositif de mélange et de chauffage et également un dispositif de transvasement de l'eau d'une bâche à l'autre.

L'ensemble selon l'invention permet de dissoudre directement l'élément absorbeur de neutrons dans l'eau et d'injecter en continu le mélange ainsi obtenu au débit requis.

## Revendications

1. Ensemble d'injection d'eau contenant un élément absorbeur de neutrons pour le refroidissement d'un coeur de réacteur nucléaire en situation de crise, **caractérisé en ce qu'il** comprend une structure (11) mobile portant une tuyauterie principale (12) dont une première extrémité (12a) est destinée à être raccordée à une alimentation en eau et dont une seconde extrémité (12b) est destinée à être raccordée à un circuit relié au circuit primaire du réacteur nucléaire et comportant entre les première (12a) et seconde (12b) extrémités par rapport au sens de circulation de l'eau :
- une pompe (14),
- des moyens (20) d'injection en continu dans l'eau de la tuyauterie principale (12) de l'élément absorbeur de neutrons sous forme de poudre,
- un premier système (25) de mélange et de dissolution de la poudre dudit élément absorbeur de neutrons avec l'eau, et
- des moyens de pilotage et de contrôle du débit d'eau et du débit de la poudre injectée.

2. Ensemble selon la revendication 1, **caractérisé en ce que** la tuyauterie principale (12) comporte, entre la pompe (14) et les moyens (20) d'injection, un dispositif de chauffage (15) de l'eau, régulé par les moyens de pilotage.

3. Ensemble selon la revendication 1 ou 2, **caractérisé en ce qu'il** comprend une tuyauterie secondaire (30) dont une première extrémité (30a) est destinée à être raccordée à une alimentation en eau et dont une seconde extrémité (30b) est raccordée à la tuyauterie principale (12) entre le premier système (25) de mélange et la seconde extrémité (12b) de la tuyauterie principale (12), ladite tuyauterie secondaire (30) comportant une pompe (31).

4. Ensemble selon l'une quelconque des revendications 1 à 3, **caractérisé en ce que** la tuyauterie principale (12) comporte, entre la seconde extrémité (30b) de la tuyauterie secondaire (30) et la seconde extrémité (12b) de la tuyauterie principale (12), un second système (26) de mélange complémentaire de la poudre de l'élément absorbeur de neutrons et de l'eau provenant de la tuyauterie secondaire (30).

5. Ensemble selon l'une quelconque des revendications 1 à 4, **caractérisé en ce que** le premier système (25) de mélange et de dissolution est formé par un mélangeur mécanique et par des inducteurs à ultrasons commandés par les moyens de pilotage.

6. Ensemble selon la revendication 4, **caractérisé en ce que** le second système (26) de mélange est formé par un mélangeur mécanique.

7. Ensemble selon l'une quelconque des revendications 1 à 6, **caractérisé en ce que** le débit d'eau dans la tuyauterie principale (12) est inférieur au débit d'eau dans la tuyauterie secondaire (30).

8. Procédé de refroidissement d'un coeur de réacteur nucléaire en situation de crise à l'aide d'un ensemble selon l'une quelconque des revendications 1 à 7, **caractérisé en ce que** :
- on transporte la structure mobile (11) à proximité du bâtiment du réacteur nucléaire sinistré,
- on raccorde la première extrémité (12a) de la tuyauterie principale (12) à une alimentation en eau et la seconde extrémité (12b) de cette tuyauterie (12) à un circuit relié au circuit primaire du réacteur,
- on commande, par les moyens de pilotage, la pompe (14) de la tuyauterie principale (12), les moyens (20) d'injection dans l'eau de la tuyauterie principale de l'élément absorbeur de neutrons sous forme de poudre, le premier système (25) de mélange et de dissolution de la poudre dudit élément absorbeur de neutrons avec l'eau,
- on alimente le circuit principal du réacteur nucléaire avec l'eau contenant l'élément absorbeur de neutrons dissout pour refroidir progressivement le coeur du réacteur nucléaire, et
- on régule par les moyens de pilotage les débits d'eau et de poudre et le premier système (25) de mélange et de dissolution.

9. Procédé selon la revendication 8, **caractérisé en ce que** l'on chauffe l'eau de la tuyauterie principale (12) et on régule la température de l'eau par les moyens de pilotage.

10. Procédé selon la revendication 8 ou 9, **caractérisé en ce que** :
- on raccorde la première extrémité (30a) de la tuyauterie secondaire (30) à une alimentation en eau,
- on commande, par les moyens de pilotage, la pompe (31) de cette tuyauterie (30),
- on injecte l'eau de la tuyauterie secondaire (30) dans la tuyauterie principale (12) entre le premier système (25) de mélange et de dissolution et la seconde extrémité (12b) de ladite tuyauterie principale (12),
- on commande, par les moyens de pilotage, le second système (26) de mélange pour effectuer un mélange complémentaire de la poudre dans l'eau,
- on alimente le circuit principal du réacteur nucléaire avec l'eau contenant l'élément absorbeur de neutrons dissout, et
- on régule par les moyens de pilotage les débits d'eau des tuyauteries principale (12) et secondaire (30), le débit de poudre et les premier (25) et second (26) systèmes de mélange et de dissolution.

## Patentansprüche

1. Einheit zum Einspritzen von ein Neutronenabsorberelement enthaltendem Wasser zum Kühlen eines Nuklearreaktorkerns in einer Krisensituation, **dadurch gekennzeichnet, dass** sie einen mobilen Aufbau (11) umfasst, der eine Hauptrohrleitung (12) trägt, von der ein erstes Ende (12a) dazu bestimmt ist, an eine Wasserversorgung angeschlossen zu werden, und von der ein zweites Ende (12b) dazu bestimmt ist, an einen mit dem Primärkreislauf des Nuklearreaktors verbundenen Kreislauf angeschlossen zu werden, und die zwischen dem ersten (12a) und dem zweiten Ende (12b) in Bezug auf die Zirkulationsrichtung des Wassers aufweist:
- eine Pumpe (14);
- Einrichtungen (20) zum kontinuierlichen Einspritzen des Neutronenabsorberelements in Form von Pulver in das Wasser der Hauptrohrleitung (12),
- ein erstes System (25) zum Mischen und Auflösen des Pulvers des Neutronenabsorberelements mit Wasser, und
- Steuer- und Überwachungseinrichtungen für den Durchsatz des Wassers und den Durchsatz des eingespritzten Pulvers.

2. Einheit nach Anspruch 1, **dadurch gekennzeichnet, dass** die Hauptrohrleitung (12) zwischen der Pumpe (14) und den Einspritzeinrichtungen (20) eine von den Steuereinrichtungen geregelte Erwärmungsvorrichtung (15) für das Wasser aufweist.

3. Einheit nach Anspruch 1 oder 2, **dadurch gekennzeichnet, dass** sie eine Sekundärrohrleitung (30) umfasst, deren erstes Ende (30a) dazu bestimmt ist, an eine Wasserversorgung angeschlossen zu werden, und deren zweites Ende (30b) zwischen dem ersten Mischsystem (25) und dem zweiten Ende (12b) der Hauptrohrleitung (12) an die Hauptrohrleitung (12) angeschlossen ist, wobei die Sekundärrohrleitung (30) eine Pumpe (31) aufweist.

4. Einheit nach einem der Ansprüche 1 bis 3, **dadurch gekennzeichnet, dass** die Hauptrohrleitung (12) zwischen dem zweiten Ende (30b) der Sekundärrohrleitung (30) und dem zweiten Ende (12b) der Hauptrohrleitung (12) ein komplementäres zweites System (26) zum Mischen des Pulvers des Neutronenabsorberelements und des von der Sekundärrohrleitung (30) kommenden Wassers aufweist.

5. Einheit nach einem der Ansprüche 1 bis 4, **dadurch gekennzeichnet, dass** das erste Misch- und Auflösungssystem (25) aus einem mechanischen Mischwerk und von den Steuereinrichtungen angesteuerten Ultraschallinduktoren besteht.

6. Einheit nach Anspruch 4, **dadurch gekennzeichnet, dass** das zweite Mischsystem (26) aus einem mechanischen Mischwerk besteht.

7. Einheit nach einem der Ansprüche 1 bis 6, **dadurch gekennzeichnet, dass** der Wasserdurchsatz in der Hauptrohrleitung (12) geringer ist als der Wasserdurchsatz in der Sekundärrohrleitung (30).

8. Verfahren zum Kühlen eines Nuklearreaktorkerns in einer Krisensituation mit Hilfe einer Einheit nach einem der Ansprüche 1 bis 7, **dadurch gekennzeichnet, dass**:
- der mobile Aufbau (11) in die Nähe des Gebäudes des geschädigten Nuklearreaktors transportiert wird,
- das erste Ende (12a) der Hauptrohrleitung (12) an eine Wasserversorgung und das zweite Ende (12b) dieser Rohrleitung (12) an einen mit dem Primärkreislauf des Reaktors verbundenen Kreislauf angeschlossen wird,
- mit den Steuereinrichtungen die Pumpe (14) der Hauptrohrleitung (12), die Einrichtungen (20) zum Einspritzen des Neutronenabsorberelements in Form von Pulver in das Wasser, das erste System (25) zum Mischen und Auflösen des Pulvers des Neutronenabsorberelements mit Wasser angesteuert werden,
- in den Hauptkreislauf des Nuklearreaktors das das aufgelöste Neutronenabsorberelement enthaltende Wasser eingespeist wird, um den Kern des Nuklearreaktors allmählich abzukühlen, und
- mit den Steuereinrichtungen die Wasser- und Pulverdurchsätze und das erste Misch- und Auflösungssystem (25) geregelt werden.

9. Verfahren nach Anspruch 8, **dadurch gekennzeichnet, dass** das Wasser der Hauptrohrleitung (12) erwärmt und die Temperatur des Wassers mit den Steuereinrichtungen geregelt wird.

10. Verfahren nach Anspruch 8 oder 9, **dadurch gekennzeichnet, dass**:
- das erste Ende (30a) der Sekundärrohrleitung (30) an eine Wasserversorgung angeschlossen wird,
- die Pumpe (31) dieser Rohrleitung (30) mit den Steuereinrichtungen angesteuert wird,
- Wasser der Sekundärrohrleitung (30) zwischen dem ersten Misch- und Auflösungssystem (25) und dem zweiten Ende (12b) der Hauptrohrleitung (12) in die Hauptrohrleitung (12) eingespritzt wird,
- mit den Steuereinrichtungen das zweite Mischsystem (26) angesteuert wird, um ein komplementäres Einmischen des Pulvers in das Wasser zu bewirken,
- in den Hauptkreislauf des Nuklearreaktors das das aufgelöste Neutronenabsorberelement enthaltende Wasser eingespeist wird, und
- mit den Steuereinrichtungen die Wasserdurchsätze der Hauptrohrleitung (12) und der Sekundärrohrleitung (30), der Pulverdurchsatz und das erste Misch- und Auflösungssystem (25) und das zweite Misch- und Auflösungssystem (26) geregelt werden.

## Claims

1. Assembly for injecting water containing a neutron-absorbing element in order to cool a nuclear reactor core in a crisis situation, **characterised in that** it comprises a mobile structure (11) containing a main pipe (12), a first end (12a) of which is intended to be connected to a water supply, and a second end (12b) of which is intended to be connected to a circuit connected to the primary circuit of the nuclear reactor, and comprising, between the first (12a) and second (12b) ends with regard to the direction of circulation of water:
- a pump (14),
- means (20) of continuous injection of the neutron-absorbing element in powder form into the water of the main pipe (12);
- a first system (25) for mixing and dissolution of the powdered form of the neutron-absorbing element in the water, and
- means of control of the flow rate of the water and that of the powder injected.

2. Assembly according to claim 1, **characterised in that** the main pipe (12) includes, between the pump (14) and the means of injection (20), a device (15) for heating the water, regulated by means of control.

3. Assembly according to claim 1 or 2, **characterised in that** it comprises a secondary pipe (30) having a first end (30a) intended to be connected to a water supply and a second end (30b) connected to the main pipe (12) between the first mixing system (25) and the second end (12b) of the main pipe (12), which secondary pipe (30) comprises a pump (31).

4. Assembly according to any of claims 1 - 3, **characterised in that** the main pipe (12) includes, between the second end (30b) of the secondary pipe (30) and the second end (12b) of the main pipe (12), a second auxiliary system (26) for mixing the powdered neutron-absorbing element and the water from the secondary pipe (30).

5. Assembly according to any of claims 1 - 4, **characterised in that** the first mixing and dissolution system (25) is formed by a mechanical mixer and ultrasound inducers controlled the means of control.

6. Assembly according to claim 4, **characterised in that** the second mixing system (26) is formed by a mechanical mixer.

7. Assembly according to any of claims 1 - 6, **characterised in that** the flow rate of the water in the main pipe (12) is lower than the flow rate of the water in the secondary pipe (30).

8. Method for cooling a nuclear reactor core in a crisis situation using an assembly according to any of claims 1 - 7, **characterised in that**:
- the mobile structure (11) is transported to the vicinity of the building housing the damaged nuclear reactor,
- the first end (12a) of the main pipe (12) is connected to a water supply and the second end (12b) of this pipe (12) is connected to a circuit connected to the primary circuit of the reactor,
- the pump (14) of the main pipe (12), the means of injection (20) of the powdered neutron-absorbing element into the water of the main pipe, and the first system (25) for mixing and dissolving the powdered form of the neutron-absorbing element in the water are controlled by the means of control,
- the main circuit of the nuclear reactor is supplied with the water containing the dissolved neutron-absorbing element to progressively cool the nuclear reactor core, and
- the flow rates of the water and the powder and the first mixing and dissolution system (25) are regulated by the means of control.

9. Method according to claim 8, **characterised in that** the water of the main pipe (12) is heated, and the water temperature is regulated, by means of the means of control.

10. Method according to claim 8 or 9, **characterised in that**:
- first end (30a) of the secondary pipe (30) is connected to a water supply,
- the pump (31) of this pipe (30) is controlled by means of the means of control,
- water from the secondary pipe (30) is injected into the main pipe (12) between the first mixing and dissolution system (25) and the second end (12b) of the main pipe (12),
- the second mixing system (26) is controlled by means of the means of control in order to provide a secondary mixture of the powder with the water,
- the main circuit of the nuclear reactor is supplied with water containing the neutron-absorbing element, and
- the flow rates of the water in the main (12) and secondary pipes (30), the flow rate of the powder, and the first (25) and second (26) mixing and dissolution systems are regulated by means of the means of control.
